# FASCICULE DE BREVET EUROPEEN

(11) **EP 2 263 353 B1**
(45) Date de publication et mention de la délivrance du brevet: **15.08.2012**
(21) Numéro de dépôt: 09721397.9
(22) Date de dépôt: 03.03.2009
(51) Int. Cl.: H04L 12/56

(54) **Technique pour déterminer un arbre point à multipoint reliant un noeud racine à une pluralité de noeuds feuilles**
Verfahren zur Bestimmung eines Punkt-zu-mehrpunkt-Baums als Verbindung eines Wurzelknotens mit mehreren Blattknoten
Technique for determining a point-to-multipoint tree linking a root node to a plurality of leaf nodes

(30) Priorité: 04.03.2008 FR 0851387
(43) Date de publication de la demande: 22.12.2010
(73) Titulaire: FRANCE TELECOM, 75015 Paris (FR)
(72) Inventeur: CHAITOU, Mohamad, F-75018 Paris (FR); LE ROUX, Jean-Louis, F-22300 Lannion (FR)
(86) Numéro de dépôt international: PCT/FR2009/050345
(87) Numéro de publication internationale: WO 2009/115726

(56) Documents cités:
- YASUKAWA NTT A FARREL (EDITOR) OLD DOG CONSULTING S: "Applicability of the Path Computation Element (PCE) to Point-to-Multipoint (P2MP) Multiprotocol Label Switching (MPLS) and Generalized MPLS (GMPLS) Traffic Engineering (TE); draft-yasukawa-pce-p2mp-app-02.txt" IETF STANDARD-WORKING-DRAFT, INTERNET ENGINEERING TASK FORCE, IETF, CH, no. 2, 15 février 2008 (2008-02-15), XP015054817 ISSN: 0000-0004
- JP VASSEUR ET AL: "A Backward Recursive PCE-based Computation (BRPC) procedure to compute shortest inter-domain Traffic Engineering Label Switched Paths; draft-ietf-pce-brpc-07.txt" IETF STANDARD-WORKING-DRAFT, INTERNET ENGINEERING TASK FORCE, IETF, CH, vol. pce, no. 7, 8 février 2008 (2008-02-08), pages 1-19, XP015053720 ISSN: 0000-0004
- YASUKAWA NTT A FARREL OLD DOG CONSULTING S: "PCC-PCE Communication Requirements for Point to Multipoint Multiprotocol Label Switching Traffic Engineering (MPLS-TE); draft-yasukawa-pce-p2mp-req-04.txt" IETF STANDARD-WORKING-DRAFT, INTERNET ENGINEERING TASK FORCE, IETF, CH, no. 4, 14 novembre 2007 (2007-11-14), XP015054818 ISSN: 0000-0004
- FARREL OLD DOG CONSULTING J-P VASSEUR CISCO SYSTEMS A ET AL: "A Path Computation Element (PCE)-Based Architecture; rfc4655.txt" STANDARD, INTERNET ENGINEERING TASK FORCE, IETF, CH, 1 août 2006 (2006-08-01), XP015047407 ISSN: 0000-0003
- HIROSHI MATSUURA ET AL: "Hierarchically Distributed PCE for Flexible Multicast Traffic Engineering" GLOBAL TELECOMMUNICATIONS CONFERENCE, 2007. GLOBECOM '07. IEEE, IEEE, PI, 1 novembre 2007 (2007-11-01), pages 2439-2444, XP031196392 ISBN: 978-1-4244-1042-2
- JP VASSEUR ET AL: "Path Computation Element (PCE) communication Protocol (PCEP); draft-ietf-pce-pcep-10.txt" IETF STANDARD-WORKING-DRAFT, INTERNET ENGINEERING TASK FORCE, IETF, CH, [Online] vol. pce, no. 10, 11 février 2008 (2008-02-11), pages 1-76, XP002503466 ISSN: 0000-0004 Extrait de l'Internet: URL:http://tools.ietf.org/html/draft-ietf- pce-pcep-10> [extrait le 2008-11-10]

## Description

L'invention concerne une technique pour déterminer un arbre point à multipoint reliant un noeud racine à une pluralité de noeuds feuilles, au moins certains des noeuds appartenant à des domaines distincts.

Cette invention se situe dans le domaine des réseaux de communication et plus particulièrement les réseaux de transport de paquets en mode connecté.

Un réseau de communication par commutation d'étiquettes multi-protocole ou réseau IP/MPLS, pour "Multi-Protocol Label Switching" est constitué d'un ensemble de domaines interconnectés entre eux. Un domaine représente un ensemble de noeuds appartenant à un même espace de gestion d'adresses. Il peut s'agir d'aire IGP, pour "Interior Gateway Protocol" dans le réseau d'un opérateur, ou de système autonome, noté AS pour "Autonomous System", un système autonome étant administré par un opérateur. Il est possible dans un tel réseau de déterminer une connexion point à point P2P MPLS-TE, pour "Multi-Protocol Label Switching Trafic Engineering", entre un routeur d'entrée et un routeur de destination, ces routeurs appartenant à des aires ou à des systèmes autonomes différents, selon un critère de coût particulier tel que le plus court chemin. Afin de déterminer une connexion optimale, il est prévu de s'appuyer sur l'utilisation de serveurs de calcul de chemins appelés PCE pour "Path Computation Element". Un tel serveur est une entité dont le rôle est de déterminer des connexions point à point P2P ou des chemins LSP, pour "Label Switched Path", sur requête d'un client. Une méthode, appelée "Backward Recursive PCE-based Computation", définie dans le document de l'IETF, pour "Internet Engineering Task Force", référencé "draft-ietf-pce-brpc-06.txt", consiste à utiliser plusieurs serveurs de calcul PCE, respectivement associés à des aires ou à des systèmes autonomes distincts, pour optimiser le calcul de la connexion P2P inter-domaine en utilisant une technique de calcul récursif. Les serveurs de calcul collaborent entre eux pour calculer un plus court chemin inter-domaine. Une demande de calcul de connexion P2P se propage de serveur de calcul en serveur de calcul, de celui associé au domaine dont dépend le routeur d'entrée vers celui associé au domaine dont dépend le routeur de destination. Par convention, le serveur de calcul associé au domaine dont dépend le routeur d'entrée est en amont, celui associé au domaine dont dépend le routeur de destination étant en aval. Puis, un message de réponse se propage dans le sens inverse, chaque serveur de calcul incorporant dans le message de réponse les informations relatives à son propre domaine, la connexion P2P ainsi déterminée étant optimale selon le critère du plus court chemin. Plus précisément, un serveur de calcul associé au domaine dont dépend le noeud de destination, PCEₙ, calcule un ensemble de plus courts chemins, chacun de ces chemins ayant pour racine un noeud de bordure d'entrée parmi les noeuds de bordure d'entrée du domaine n, et comme feuille le noeud de destination du LSP MPLS-TE. L'union de ces chemins est un chemin multipoint-à-point appelé VSPT, pour "Virtual Shortest Path Tree". Le chemin multipoint à point calculé par le serveur de calcul PCEₙ, et noté VSPTₙ, est envoyé au serveur de calcul PCE₍ₙ₋₁₎ en amont. Il comprend au moins les racines et les coûts respectifs des chemins point à point appartenant au chemin multipoint à point calculé. En utilisant le chemin multipoint à point fourni par un serveur de calcul en aval, et la topologie du domaine i, le serveur de calcul PCEᵢ calcule un ensemble de plus courts chemins tel que chacun de ces chemins a pour racine un noeud de bordure d'entrée du domaine i parmi l'ensemble des noeuds de bordure d'entrée du domaine i et comme feuille le noeud de destination du LSP MPLS-TE. Des chemins multipoint à point sont ainsi élaborés de proche en proche par les serveurs de calcul jusqu'au serveur de calcul du domaine auquel appartient le noeud racine du chemin point à point. Ce dernier détermine alors un chemin point à point entre le noeud racine et le noeud de destination selon un critère de plus court chemin.

Cette méthode, appliquée à la détermination d'un chemin point à multipoint, noté P2MP, comprenant un noeud racine et une pluralité de noeuds, appelés noeuds feuilles, localisés dans différents domaines, permet de déterminer une pluralité de chemins point à point P2P entre le noeud racine et les noeuds feuilles. Ainsi, cette méthode permet de déterminer un arbre de plus court chemin minimisant la distance entre le noeud racine et chacun des noeuds feuilles. Toutefois, elle ne permet pas de minimiser le nombre de liens empruntés et donc la consommation de bande passante. En effet, un deuxième chemin entre le noeud racine et un premier noeud feuille, bien qu'il soit plus long qu'un premier plus court chemin, peut permettre de joindre à moindre coût un deuxième noeud feuille. Cette méthode présente donc l'inconvénient de ne pas optimiser l'utilisation des ressources dans les différents domaines.

Il existe donc un besoin d'une technique permettant de déterminer un chemin point à multipoint entre un noeud racine et une pluralité de noeuds feuilles, dont certains au moins sont situés dans des domaines différents, optimisant l'utilisation des ressources dans les différents domaines.

L'invention répond à ce besoin en proposant un procédé pour déterminer un arbre point à multipoint reliant un noeud racine à une pluralité de noeuds feuilles, au moins certains des noeuds appartenant à des domaines distincts, mis en oeuvre par une entité de calcul de chemins associée à un domaine, dit domaine courant, ledit procédé comprenant :
- une étape de réception d'au moins un message comprenant un premier ensemble d'au moins un identifiant d'un bouquet d'au moins une branche et d'un coût respectif associé audit bouquet d'au moins une branche en provenance d'au moins une autre entité de calcul de chemins associée à un domaine situé en aval du domaine courant, le bouquet d'au moins une branche permettant de joindre les noeuds feuilles situés dans des domaines en aval,
- une étape de détermination d'au moins un nouveau bouquet d'au moins une branche en fonction dudit au moins un premier ensemble reçu, ledit nouveau bouquet de branches présentant un coût minimal et permettant de joindre également le cas échéant les noeuds feuilles du domaine courant.

Un domaine représente un sous-ensemble ou un ensemble de noeuds administré par un même opérateur. Il s'agit alors d'une aire IGP ou d'un système autonome.

Chaque entité de calcul de chemins détermine en fonction des informations relatives à un ensemble de bouquets de branches reçu d'une ou de plusieurs autre(s) entité(s) de calcul de chemins un nouvel ensemble de bouquets de branches prenant en compte le cas échéant des noeuds feuilles situés dans le domaine courant, le ou les ensembles de bouquets de branches reçus et les informations de topologie du domaine courant, chacun de ces bouquets de branche du nouvel ensemble étant optimisé en fonction d'un critère de coût. On appelle bouquet de branches un ensemble de chemins point à point ou de chemins point à multipoint. Le bouquet de branches peut être composé d'une seule branche s'il est issu d'un seul noeud racine ou d'une pluralité de branches. Ainsi, un nouvel ensemble de bouquet de branches déterminé par l'entité de calcul de chemins associée au domaine dans lequel se trouve le noeud racine est un arbre point à multipoint P2MP reliant le noeud racine avec une pluralité de noeuds feuilles, dont au moins certains sont localisés dans des domaines différents, optimisant ainsi l'utilisation des ressources réseau en raison du respect du critère de coût donné. Le critère de coût peut correspondre à un nombre de liens empruntés. On notera que l'invention peut également être mise en oeuvre pour un critère de coût tel que le plus court chemin.

Ainsi, on détermine pour un sous-ensemble donné de noeuds d'entrée dans le domaine courant jouant le rôle de racines un bouquet de branches minimisant un critère de coût et permettant de relier l'ensemble des noeuds feuilles situés dans les domaines en aval et le cas échéant, le domaine courant.

Les informations relatives aux bouquets de branches peuvent être explicites ou bien implicites, s'il n'est pas souhaitable de fournir des informations de topologie des domaines en aval. Elles comprennent un sous-ensemble des noeuds d'entrée du domaine an aval.

Dans un premier mode de réalisation, lors de l'étape de détermination d'au moins un nouveau bouquet, on limite le nombre de nouveaux bouquets à un nombre prédéterminé.

Afin de réduire le temps de calcul, il est possible d'obtenir des arbres sous-optimaux en limitant le nombre de sous-ensembles de noeuds d'entrée.

Dans un deuxième mode de réalisation, lors de l'étape de détermination d'au moins un nouveau bouquet, on limite le nouveau bouquet à une branche.

Afin de réduire le temps de calcul, il est possible d'obtenir des arbres sous-optimaux en se limitant à des bouquets d'une seule branche. associée à un domaine situé en aval du domaine courant, le bouquet d'au moins une branche permettant de joindre les noeuds feuilles situés dans des domaines en aval, - des moyens de détermination d'au moins un nouveau bouquet d'au moins une branche en fonction de premiers ensembles reçus, ledit nouveau bouquet de branches présentant un coût minimal et permettant de joindre également le cas échéant les noeuds feuilles du domaine courant.

L'invention concerne en outre un système comprenant une pluralité d'entités de calcul de chemins telles que décrites précédemment.

De plus, l'invention concerne un noeud d'un réseau de communication comprenant une entité de calcul de chemin telle que décrite précédemment.

L'invention concerne également un programme d'ordinateur comportant des instructions pour la mise en oeuvre du procédé pour déterminer un arbre point à multipoint reliant un noeud racine à une pluralité de noeuds feuilles, au moins certains des noeuds appartenant à des domaines distincts tel que décrit précédemment lorsque ce programme est exécuté par un processeur.

L'invention concerne en outre un signal, émis par une entité de calcul de chemin associée à un domaine, comme étant indiqué dans la revendication 10.

Le document de Yasukawa intitulé "Applicability of the Path Computation Element (PCE) to Point-to-Multipoint (P2MP) Multiprotocol Label Switching (MPLS) and Generalized MPLS (GMPLS) Traffic Engineering (TE)", draft-yasukawa-pce-p2mp-app-02.txt, examine les conditions d'application d'une entité de calcul de chemins (PCE) pour déterminer un chemin point-à-multipoint dans des réseaux MPLS et GMPLS. Il décrit différents modèles d' architecture pour utiliser une telle entité. L'invention sera mieux comprise à l'aide de la description suivante d'un mode de réalisation particulier du procédé de l'invention, en référence aux dessins annexés sur lesquels :
- la figure 1 représente un schéma représentant une architecture de réseaux où est mis en oeuvre le procédé selon l'invention ;
- la figure 2A représente une demande de détermination d'un arbre point à multipoint dans un mode particulier de réalisation de l'invention ;

De plus, les étapes de réception d'au moins un message comprenant un premier ensemble d'au moins un identifiant d'un bouquet d'au moins une branche et d'un coût respectif associé audit bouquet et de détermination d'au moins un nouveau bouquet d'au moins une branche puis une étape d'envoi d'un message comprenant un deuxième ensemble du ou des identifiants du ou des nouveaux bouquets déterminés et d'un coût respectif associé audit nouveau bouquet sont exécutées successivement d'aval en amont par des entités de calcul de chemins vers une entité de calcul de chemins associée au domaine en amont comprenant le noeud racine.

Les entités de calcul coopèrent dans la détermination de l'arbre point à multipoint jusqu'à ce que l'entité de calcul de chemins en charge du domaine où se situe le noeud racine détermine à son tour une branche ayant comme racine le noeud racine et comme feuilles l'ensemble des noeuds feuilles situés dans les domaines en aval et le cas échéant dans le domaine racine.

En outre, le procédé comprend une étape d'envoi d'une demande de détermination d'un arbre point à multipoint vers des entités de calcul de chemins associées à des domaines situés en aval du domaine courant préalablement à l'étape de réception.

Le procédé est initié par une entité de calcul de chemins initiatrice qui transmet d'amont en aval une demande de détermination du chemin point à multipoint. La demande est transmise de proche en proche d'entité de calcul en entité de calcul. Le message de réponse est transmis quant à lui d'aval en amont, jusqu'à l'entité de calcul de chemins initiatrice.

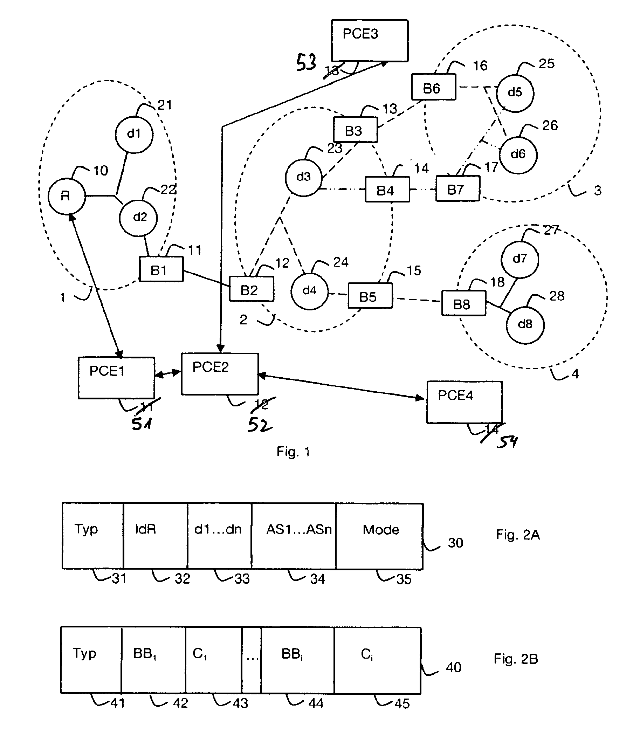

L'invention concerne également une entité de calcul de chemins associée à un domaine, dit domaine courant, pour déterminer un arbre point à multipoint reliant un noeud racine à une pluralité de noeuds feuilles, au moins certains des noeuds appartenant à des domaines distincts, ladite entité comprenant :
- des moyens de réception d'au moins un message comprenant un premier ensemble d'au moins un identifiant d'un bouquet d'au moins une branche et d'un coût respectif associé audit bouquet en provenance d'au moins une autre entité de calcul de chemins
- la figure 2B représente un message de réponse à un message de détermination d'un arbre point à multipoint dans un mode particulier de réalisation de l'invention ;

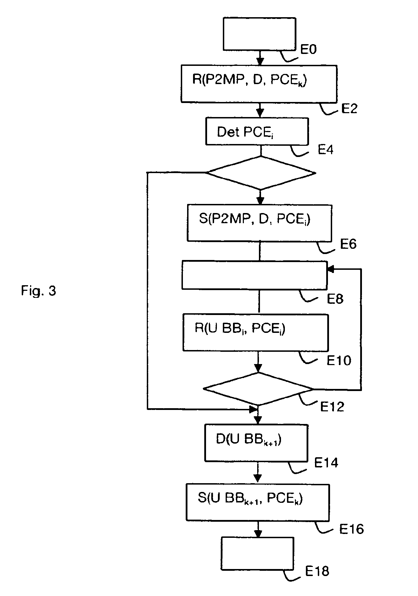

- la figure 3 représente les étapes du procédé selon un mode particulier de réalisation de l'invention ;

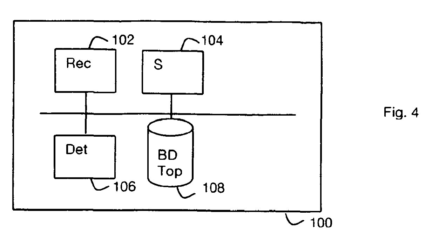

- la figure 4 représente une entité de calcul de chemins selon un mode particulier de réalisation de l'invention.

L'architecture de réseaux dans lequel le procédé est mis en oeuvre va maintenant être décrite en relation avec la figure 1. Quatre domaines ou systèmes autonomes AS 1 à 4 sont représentés. Le premier domaine 1 comprend une pluralité de noeuds dont quatre d'entre eux sont représentés sur la figure 1 : un routeur racine 10, noté R, racine d'un arbre point à multipoint, deux noeuds feuilles 21, 22, notés respectivement d1 et d2, un noeud de bordure ou de sortie 11, noté B1. Le noeud de sortie B1 permet d'acheminer du trafic du premier domaine 1 au deuxième domaine 2 par l'intermédiaire d'un noeud d'entrée 12, noté B2, situé dans le deuxième domaine 2. Le deuxième domaine 2 est en aval du premier domaine 1. Le deuxième domaine 2 comprend une pluralité de noeuds, dont six d'entre eux sont représentés sur la figure 1 : le noeud d'entrée B2, deux noeuds feuilles 23, 24, notés respectivement d3 et d4, trois noeuds de bordure ou de sortie 13, 14, 15, notés respectivement B3, B4 et B5. Les noeuds de sortie B3 et B4 permettent d'acheminer du trafic du deuxième domaine 2 au troisième domaine 3 par l'intermédiaire de noeuds de bordure ou d'entrée 16, 17, notés respectivement B6 et B7. Plus précisément, le noeud de sortie B3 du deuxième domaine 2 est connecté au noeud d'entrée B6 du troisième domaine 3 et le noeud de sortie B4 du deuxième domaine 2 est connecté au noeud d'entrée B7 du troisième domaine 3. Le troisième domaine 3 comprend une pluralité de noeuds dont quatre d'entre eux sont représentés : les noeuds d'entrée B6 et B7, deux noeuds feuilles 25 et 26, notés respectivement d5 et d6. Le noeud de sortie B5 du deuxième domaine 2 permet d'acheminer du trafic du deuxième domaine 2 au quatrième domaine 4 par l'intermédiaire d'un noeud de bordure ou d'entrée 18, noté B8, situé dans le quatrième domaine 4. Le quatrième domaine 4 comprend une pluralité de noeuds dont trois d'entre eux sont représentés sur la figure 1 : le noeud d'entrée B8, deux noeuds feuilles 27, 28, notés respectivement d7 et d8.

On se place par la suite dans l'exemple particulier tel que représenté sur cette figure 1 pour la détermination d'un arbre point à multipoint entre le noeud racine R et les noeuds feuilles d1 à d8, les noeuds feuilles appartenant à des domaines distincts. Par convention, les troisième et quatrième domaines 3, 4 sont en aval des premier et deuxième domaines 1, 2. Réciproquement, le premier domaine 1 est en amont des deuxième, troisième et quatrième domaines. Le deuxième domaine 2 est en amont des troisième et quatrième domaines. Les termes "amont" et "aval" sont donc définis par rapport au sens de propagation du domaine comprenant le noeud racine R vers les domaines comprenant les noeuds feuilles d1 à d8.

Quatre serveurs de calcul de chemins 51, 52, 53, 54, notés respectivement PCE1 à PCE4, sont en charge de la détermination de chemins respectivement dans les quatre domaines 1, 2, 3, 4. Ils mémorisent dans des moyens de stockage 108 la topologie du ou des domaines dont ils ont la charge. Ils communiquent entre eux, par exemple selon un protocole nommé "Path Computation Element communication Protocol" ou PCEP, tel que spécifié par l'IETF (Internet Engineering Task Force) dans le document intermédiaire "draft-ietf pce-pcep-10.txt".

Le procédé pour déterminer un chemin point à multipoint, d'un noeud racine vers des noeuds feuilles, certains des noeuds étant situés dans des domaines distincts, va maintenant être décrit en relation avec la figure 3.

Par la suite, on appelle bouquet de branches un ensemble de chemins point à point ou de chemins point à multipoint. Le bouquet de branches peut être composé d'une seule branche s'il est issu d'un seul noeud racine ou d'une pluralité de branches.

Dans une étape initiale non représentée, le serveur de calcul de chemins PCE 1 reçoit en provenance d'une entité cliente une demande de détermination d'un chemin point à multipoint. Ce serveur de calcul PCE1 est appelé par la suite serveur de calcul initiateur.

Une telle demande 30 est représentée à la figure 2A et comprend notamment :
- un champ 31, noté Typ, représentatif du type d'arbre à déterminer, c'est-à-dire dans le mode particulier de réalisation de l'invention un arbre point à multipoint ;
- un identifiant 32, noté IdR, d'un noeud racine de l'arbre point à multipoint ;
- une liste 33, notée d1...dn, d'identifiants de noeuds feuilles ;
- un arbre 34, noté AS1...ASn, point à multipoint représentatif d'une arborescence de l'ensemble des domaines et comprenant l'ensemble des domaines auxquels appartiennent les noeuds feuilles, appelé par la suite arbre des domaines ;
- un champ 35, noté Mode, représentatif d'un mode de calcul de l'arbre. Il s'agit par exemple d'un critère de coût en nombre de liens empruntés "coût minimum" ou MCT pour "Minimum Cost Tree" ou d'un critère de coût en terme de longueur de chemin "chemin le plus court" ou SPT pour "Shortest Path Tree".

Le coût correspondant au critère MCT peut être un coût minimal exact calculé par un algorithme de Steiner exact ou approximatif à l'aide d'une heuristique appropriée comme celle de Takahashi et Matsuyama. Le coût d'un arbre représente le nombre des liens de l'arbre P2MP. Le coût d'une branche représente le nombre de liens de cette branche. Par la suite, on se place dans le cas particulier de l'algorithme de Takahashi et Matsuyama, tel que décrit dans l'article de H. Takahashi et A. Matsuyama, intitulé "An approximate solution for the Steiner problem in graphs", publié dans Math. Japonica, vol. 24. 1981.

Par définition, le chemin de coût minimum entre un noeud N et un arbre A, constitué d'un ensemble de noeuds, est le chemin entre le noeud N et un noeud de A tel que le coût de ce chemin est le plus petit des coûts des plus courts chemins entre N et les noeuds de A. Pour déterminer le coût MCT d'un arbre P2MP connectant un noeud racine R à plusieurs noeuds feuilles d1, d2, ... dn dans l'heuristique de Takahashi et Matsuyama, on procède de la manière suivante :
Etape 1 : On commence par un arbre contenant initialement la racine R de l'arbre P2MP.
Etape 2 : On calcule le plus court chemin entre chaque feuille d1, d2, ..., dn et cet arbre. Parmi ces "n" chemins, on choisit celui ayant le coût minimal, par exemple le chemin cj allant vers dj. Ce chemin est ajouté à l'arbre P2MP qui contient maintenant ce chemin en plus de la racine R. On supprime dj de l'ensemble des feuilles.
Etape i=3 et suivantes : On répète l'étape 2 jusqu'à ce que l'ensemble des feuilles soit vide.

Si une branche d'un bouquet de branches est un arbre P2MP, le coût est déterminé par un coût minimal exact ou par l'heuristique de Takahashi par exemple. Si une branche d'un bouquet de branches est un chemin point à point P2P, le coût MCT représente le coût du plus court chemin.

On se place par la suite au niveau d'un serveur de calcul de chemins PCEₖ₊₁, appelé par la suite serveur courant.

Le procédé de détermination est dans une étape E0 d'attente de réception d'un message. Dans une étape de réception E2, notée "R(P2MP, D, PCEₖ)", le serveur de calcul de chemins courant PCEₖ₊₁ reçoit une demande 30 de détermination d'un arbre point à multipoint en provenance du serveur de calcul de chemins PCEₖ en charge du domaine en amont.

Le serveur de calcul courant PCEₖ₊₁détermine, dans une étape E4, notée "Det PCEᵢ", de détermination des domaines situés en aval, une liste de serveurs de calcul de chemins en charge d'un ou de plusieurs domaines situés en aval et connectés au domaine courant à partir de l'arbre 34 des domaines indiqué dans la demande 30 de détermination.

Si le serveur de calcul de chemins courant est en charge d'un domaine de destination, c'est-à-dire qu'il n'y a plus de domaines en aval à contacter, le procédé passe à une étape E 14 de détermination d'un ensemble de bouquets de branches.

Dans le cas contraire, c'est-à-dire s'il existe un ou plusieurs domaines en aval, pour chaque serveur de calcul en aval de la liste, le serveur de calcul de chemins courant PCEₖ₊₁ envoie dans une étape E6 d'envoi, notée "S(P2MP, D, PCEᵢ)", la demande de détermination d'un arbre point à multipoint.

On note qu'ainsi la demande 30 de détermination d'un arbre point à multipoint se propage d'amont en aval en fonction de l'arbre 34 des domaines indiqué dans la demande de détermination.

Le procédé passe ensuite dans une étape d'attente E8, en attente de réception des messages de réponse aux demandes 30 de détermination d'un arbre point à multipoint.

Dans une étape de réception E10, notée "R(U BBᵢ, PCEᵢ)", le serveur de calcul de chemins courant PCEₖ₊₁ reçoit en provenance d'un serveur de calcul de chemins en aval PCEᵢ une réponse 40 à la demande 30 de détermination d'un arbre point à multipoint.

Un message de réponse 40 à une telle demande, émis par un serveur de calcul de chemins en aval PCEₗ du domaine ASₗ, est représenté à la figure 2B. Il comprend notamment :
- un champ 41, noté Typ, représentatif du type d'arbre déterminé, c'est-à-dire dans le mode particulier de réalisation de l'invention un arbre point à multipoint ;
- un ou plusieurs identifiants de bouquets de branches 42, 44, notés BBₗ et BBᵢ, un bouquet de branches comprenant en tant que noeuds feuilles l'ensemble des noeuds feuilles situés dans le domaine ASₗ et les domaines en aval du domaine ASₗ du serveur en aval PCE_{I} émetteur de la réponse et en tant que noeuds d'origine des branches du bouquet un sous-ensemble des noeuds d'entrée du domaine AS_{I} du serveur en aval PCEₗ émetteur de la réponse ;
- un ou plusieurs coûts 43, 45, notés Cₗ et Cᵢ, respectivement associés aux bouquets de branches BBₗ et BBᵢ.

Un identifiant de bouquet de branches comprend notamment le sous-ensemble des noeuds d'entrée dans le domaine AS_{I} du serveur en aval PCEₗ émetteur de la réponse.

Le chemin peut également être identifié par l'intermédiaire d'une clef identifiant le chemin, appelée Confidential Path Segment (CPS), pour garder la confidentialité entre les domaines, tel que décrit dans le document de l'IETF intitulé "draft-ietf-pce-path-key-01.txt".

En variante, le message de réponse comprend également pour chaque bouquet de branches une description explicite de son arborescence.

Dans une étape E12 de test, le serveur courant PCEₖ₊₁ détermine si l'ensemble des messages de réponse en provenance des domaines en aval du domaine ASₖ₊₁ a été reçu. Si ce n'est pas le cas, le procédé retourne à l'étape E8 en attente de réception.

Si le résultat du test à l'étape E12 de test est positif, c'est-à-dire lorsque l'ensemble des messages de réponses en provenance des serveurs de calcul de chemin des domaines en aval du domaine ASₖ₊₁ a été reçu, le procédé passe à une étape E14 de détermination d'un ensemble de bouquets de branches, notée D(U BBₖ₊₁).

A l'étape E14 de détermination, le serveur de calcul de chemins courant PCEₖ₊₁ détennine un ensemble de nouveaux bouquets de branches BBₖ₊₁. Un nouveau bouquet de branches est déterminé pour un sous ensemble des noeuds d'entrée du domaine courant, pris en tant que noeuds d'origine ou racines des branches, et comprend en tant que feuilles l'ensemble des noeuds feuilles situés dans les domaines en aval et le cas échéant les noeuds feuilles situés dans le domaine courant ASₖ₊₁. Chaque nouveau bouquet de branches est déterminé de façon à minimiser la fonction de coût telle que demandée dans la demande 30 de détermination d'un chemin point à multipoint et en prenant en compte les informations relatives aux bouquets de branche reçues des serveurs de calcul de chemins en aval à l'étape de réception E10. Ces bouquets de branche ont comme racines des noeuds d'entrée du domaine en aval. A ces noeuds d'entrée du domaine en aval sont associés des noeuds de sorties du domaine courant.

A titre d'exemple illustratif, on suppose que deux messages de réponse ont été reçus en provenance des serveurs de calcul de chemins en charge des domaines AS_{I} et AS₂, le message relatif au domaine AS₁ comprenant un ensemble AB₁ de bouquets de branches et celui relatif au domaine AS₂ comprenant un ensemble AB₂ de bouquets de branches. On considère un sous-ensemble de noeuds d'entrée donné du domaine courant. Pour chacune des combinaisons possibles de bouquets de branches deux à deux des ensembles AB₁ et AB₂, on calcule le coût d'un bouquet comprenant le sous-ensemble des noeuds d'entrée du domaine courant, les noeuds feuilles appartenant au domaine courant, les noeuds racines des bouquets de branches considérés (appartenant respectivement au domaine AS₁ et au domaine AS₂) et les bouquets de branches considérés. On retient ensuite comme nouveau bouquet celui qui présente la fonction de coût minimal. On recommence pour un nouveau sous-ensemble de noeuds d'entrée du domaine courant. Le nombre d'itérations est déterminé en fonction du nombre de sous-ensembles de noeuds d'entrée du domaine courant.

Dans le cas particulier d'un serveur de calcul de chemins en charge d'un domaine de destination, le nouveau bouquet de branches comprend uniquement les noeuds feuilles situés dans le domaine de destination. L'étape E14 est donc adaptée de façon à prendre en compte la spécificité du domaine courant.

Une fois déterminé un ensemble d'au moins un bouquet de branches dans le domaine courant ASₖ₊₁, dans une étape E16 de réponse, notée "S(U BBₖ, PCEₖ₊₁)", le serveur de calcul de chemins courants PCEₖ₊₁ transmet au serveur de calcul de chemins du domaine amont PCEₖ une réponse 40 à la demande 30 de détermination d'un arbre point à multipoint comprenant le ou les identifiants des bouquets de branches ainsi déterminé ainsi que les coûts associés respectifs. Le procédé se termine à l'étape E18.

On note qu'ainsi la réponse se transmet de serveur de calcul en serveur de calcul dans le sens contraire à la demande de détermination et atteint le serveur de calcul initiateur de la demande.

Le serveur de calcul initiateur de la demande effectue de la même manière que ces prédécesseurs l'étape E14 de détermination d'un bouquet de branches en prenant comme noeud d'origine de ce bouquet d'une branche le noeud racine R de l'arbre point à multipoint tel que précisé dans la demande 30 de détermination d'un arbre point à multipoint. On note qu'ainsi on détermine un arbre point à multipoint minimisant la fonction de coût donnée, cet arbre point à multipoint comprenant des noeuds feuilles situés dans des domaines distincts.

Dans une première variante, on limite le nombre de bouquets à une valeur prédéterminée. Cette première variante présente l'avantage de réduire le temps de calcul nécessaire tout en permettant la détermination d'un arbre point à multipoint toutefois sous-optimal dans ce cas par rapport au mode de réalisation tel que décrit ci-dessus.

Dans une deuxième variante, on limite le nombre de bouquets de branches en composant des sous ensembles comprenant un unique noeud d'entrée en tant que noeud d'origine du bouquet d'une branche. Le bouquet est composé d'une branche et est alors un arbre point à multipoint ou point à point comprenant en tant que noeud d'origine un noeud d'entrée du domaine courant. Cette deuxième variante présente les mêmes avantages que la première variante.

On va maintenant appliquer le procédé de l'invention à l'exemple particulier décrit à la figure 1. Les informations relatives aux coûts ne sont pas indiquées sur la figure 1 afin de ne pas surcharger cette dernière. On se place dans le cas particulier où le critère de coût correspond au nombre de liens empruntés.

Le serveur de calcul de chemin PCE1 reçoit dans une étape E2 une demande de détermination d'un arbre point à multipoint entre le noeud racine R et les noeuds feuilles d1 à d8.

Il transmet dans une étape E6 cette demande au serveur de calcul de chemins PCE2 qui le transmet à son tour aux serveurs de calcul de chemins PCE3 et PCE4.

Le serveur de calcul de chemins PCE3 détermine à l'étape E14 un ensemble de bouquets de branches comprenant un premier bouquet d'une branche du noeud B6 aux feuilles d5 et d6 de coût dix-huit, noté AB31, et un deuxième bouquet d'une branche du noeud B7 aux feuilles d5 et d6 de coût dix, noté AB32. Il transmet dans une étape E16 un message de réponse au serveur PCE2 comprenant ces deux bouquets.

Le serveur de calcul de chemins PCE4 détermine à l'étape E14 un ensemble de bouquets de branches comprenant un bouquet d'une branche du noeud B8 aux feuilles d7 et d8 de coût douze, noté AB41. Il transmet dans une étape E16 un message de réponse au serveur PCE2 comprenant ce bouquet.

Le serveur de calcul de chemins PCE2 reçoit ces deux messages de réponse et détermine à l'étape E14 un nouveau bouquet de branches. Il y a un seul noeud d'entrée B2 dans le deuxième domaine 2. Le serveur PCE2 détermine un premier bouquet de branches comprenant le noeud d'entrée B2, les noeuds feuilles d3 et d4 du deuxième domaine, le premier bouquet AB31 du troisième domaine 3 et le bouquet AB41 du quatrième domaine 4. Le premier bouquet de branches comprend donc également les noeuds de sortie du deuxième domaine 2 correspondant, les noeuds B3 et B5. La partie du premier bouquet dans le deuxième domaine 2 a un coût de treize, auquel il faut ajouter le coût dans le troisième domaine 3, c'est-à-dire dix-huit, et le coût dans le quatrième domaine 4, c'est-à-dire douze. Ce premier bouquet de branches a donc un coût total de quarante-trois.

Puis, le serveur PCE2 détermine un deuxième bouquet de branches comprenant le noeud d'entrée B2, les noeuds feuilles d3 et d4 du deuxième domaine, le deuxième bouquet AB32 du troisième domaine 3 et le bouquet AB41 du quatrième domaine 4. Le deuxième bouquet de branches comprend donc également les noeuds de sortie du deuxième domaine 2 correspondant, les noeuds B4 et B5. La partie du deuxième bouquet dans le deuxième domaine 2 a un coût de vingt, auquel il faut ajouter le coût dans le troisième domaine 3, c'est-à-dire dix, et le coût dans le quatrième domaine 4, c'est-à-dire douze. Ce deuxième bouquet de branches a donc un coût total de quarante-deux. Ce deuxième bouquet de branches est donc sélectionné et est transmis au serveur de calcul initiateur PCE1 en tant que bouquet de branche AB21. Le serveur initiateur PCE1 va déterminer un nouveau bouquet de branches à l'étape E14. Le serveur PCE2 détermine un nouveau bouquet de branches comprenant le noeud racine R, les noeuds feuilles d1 et d2 du premier domaine, le bouquet AB21 reçu du deuxième domaine 2. Le nouveau bouquet de branches comprend donc également le noeud de sortie du premier domaine 1 correspondant, le noeud B1. La partie du nouveau bouquet dans le premier domaine 1a un coût de huit, auquel il faut ajouter le coût dans les domaines en aval, c'est-à-dire quarante-deux, soit un coût total de cinquante.

Une entité de calcul de chemin 100 va maintenant être décrite en relation avec la figure 4.

L'entité 100 de calcul de chemins associée à un domaine, dit domaine courant, pour déterminer un arbre point à multipoint reliant un noeud racine 10 à une pluralité de noeuds feuilles 21-28, au moins certains des noeuds appartenant à des domaines distincts 1-4 comprend :
- un module 102 de réception d'au moins un message 40 comprenant un premier ensemble d'au moins un identifiant d'un bouquet d'au moins une branche et d'un coût 43, 45 associé audit bouquet en provenance d'au moins une autre entité 52-54 de calcul de chemins associée à un domaine situé en aval du domaine courant, le bouquet d'au moins une branche permettant de joindre les noeuds feuilles situés dans des domaines en aval, noté "Rec" sur la figure 4,
- un module 106 de détermination d'au moins un nouveau bouquet d'au moins une branche en fonction dudit au moins un premier ensemble reçu, ledit nouveau bouquet de branches présentant un coût minimal et permettant de joindre également le cas échéant les noeuds feuilles du domaine courant, noté "Det" sur la figure 4,
- un module 104, noté "S" sur la figure 4, d'envoi du deuxième ensemble déterminé à une entité de calcul en amont,
- les moyens de stockage 108, notés "BD_Top" sur la figure 4, agencés pour stocker la topologie du ou des domaines dont l'entité a la charge.

Le module 102 est en outre agencé pour recevoir en provenance d'une autre entité de calcul de chemins une demande 30 de détermination d'un arbre point à multipoint.

Les modules 102 de réception et 104 d'émission sont adaptés pour recevoir et émettre des messages conformes au protocole PCEP.

Les modules 102, 104, 106 sont agencés pour mettre en oeuvre le procédé de détermination précédemment décrit. Il s'agit de préférence de modules logiciels comprenant des instructions logicielles pour faire exécuter les étapes du procédé de détermination précédemment décrit, mises en oeuvre par un processeur d'une entité de calcul de chemins.

L'invention concerne donc aussi :
- un programme d'ordinateur comportant des instructions pour la mise en oeuvre du procédé de détermination tel que décrit précédemment lorsque ce programme est exécuté par un processeur ;
- un support d'enregistrement lisible par une entité de calcul de chemins sur lequel est enregistré le programme d'ordinateur décrit ci-dessus.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

L'invention concerne également un système comprenant une pluralité d'entités de calcul de chemins telles que décrites précédemment.

L'entité de calcul de chemins telle que décrite précédemment peut être intégrée dans un routeur du réseau de communication ou bien dans un serveur de calcul de chemins.

La description a été faite pour des domaines équivalents à des systèmes autonomes. Il est possible de prendre en tant que domaines des aires IGP, pour "Interior Gateway Protocol". Dans ce cas, les noeuds de bordure sont à la fois noeuds d'entrée d'une aire et noeuds de sortie d'une autre aire.

## Revendications

1. Procédé pour déterminer un arbre point à multipoint reliant un noeud racine (10) à une pluralité de noeuds feuilles (21-28), au moins certains des noeuds appartenant à des domaines distincts (1-4), mis en oeuvre par une entité (51,52) de calcul de chemins associée à un domaine, dit domaine courant, ledit procédé **caractérisé en ce qu'**elle comprend :
- une étape (E10) de réception d'au moins un message (40) comprenant un premier ensemble d'au moins un identifiant d'un bouquet d'au moins une branche et d'un coût (43, 45) respectif associé audit bouquet en provenance d'au moins une autre entité (52 54) de calcul de chemins associée à un domaine situé en aval du domaine courant, le bouquet d'au moins une branche permettant de joindre les noeuds feuilles situés dans des domaines en aval,
- une étape (E14) de détermination d'au moins un nouveau bouquet d'au moins une branche en fonction dudit au moins un premier ensemble reçu, ledit nouveau bouquet de branches présentant un coût minimal et permettant de joindre également le cas échéant les noeuds feuilles du domaine courant.

2. Procédé selon la revendication 1, dans lequel, lors de l'étape de détermination d'au moins un nouveau bouquet, on limite le nombre de nouveaux bouquets à un nombre prédéterminé.

3. Procédé selon la revendication 1, dans lequel, lors de l'étape de détermination d'au moins un nouveau bouquet, on limite le nouveau bouquet à une branche.

4. Procédé selon la revendication 1, dans lequel les étapes de réception (E10) d'au moins un message comprenant un premier ensemble d'au moins un identifiant d'un bouquet d'au moins une branche et d'un coût (43, 45) respectif associé audit bouquet et de détermination (E 14) d'au moins un nouveau bouquet d'au moins une branche puis une étape (E 16) d'envoi d'un message comprenant un deuxième ensemble du ou des identifiants du ou des nouveaux bouquets déterminés et d'un coût respectif associé audit nouveau bouquet sont exécutées successivement d'aval en amont par des entités (51) de calcul de chemins vers une entité (52-54) de calcul de chemins associée au domaine en amont comprenant le noeud racine.

5. Procédé selon la revendication 1, comprenant en outre une étape (E6) d'envoi d'une demande (30) de détermination d'un arbre point à multipoint vers des entités de calcul de chemins associées à des domaines situés en aval du domaine courant préalablement à l'étape (E10) de réception.

6. Entité (100) de calcul de chemins associée à un domaine, dit domaine courant, pour déterminer un arbre point à multipoint reliant un noeud racine (10) à une pluralité de noeuds feuilles (21-28), au moins certains des noeuds appartenant à des domaines distincts (1-4), ladite entité étant **caractérisé en ce qu'**elle comprend:
- des moyens (102) de réception d'au moins un message (40) comprenant un premier ensemble d'au moins un identifiant d'un bouquet d'au moins une branche et d'un coût respectif associé audit bouquet en provenance d'au moins une autre entité (52 54) de calcul de chemins associée à un domaine situé en aval du domaine courant, le bouquet d'au moins une branche permettant de joindre les noeuds feuilles situés dans des domaines en aval,
- des moyens (106) de détermination d'au moins un nouveau bouquet d'au moins une branche en fonction de premiers ensembles reçus, ledit nouveau bouquet de branches présentant un coût minimal et permettant de joindre également le cas échéant les noeuds feuilles du domaine courant.

7. Système comprenant une pluralité d'entités de calcul de chemins selon la revendication 6.

8. Noeud d'un réseau de communication comprenant une entité de calcul de chemin selon la revendication 6.

9. Programme d'ordinateur comportant des instructions pour la mise en oeuvre du procédé pour déterminer un arbre point à multipoint reliant un noeud racine (10) à une pluralité de noeuds feuilles (21-28), au moins certains des noeuds appartenant à des domaines distincts (1-4), selon la revendication 1 lorsque ce programme est exécuté par un processeur.

10. Signal, émis par une entité de calcul de chemin associée à un domaine à destination d'une entité de calcul de chemin associée à un domaine en amont, en réponse à une demande de détermination d'un arbre point à multipoint reliant un noeud racine à une pluralité de noeuds feuilles, au moins certains des noeuds appartenant à des domaines distincts, ledit signal portant un message (40) comprenant un ensemble d'au moins un identifiant d'un bouquet d'au moins une branche et d'un coût (43, 45) respectif associé audit bouquet, le bouquet d'au moins une branche permettant de joindre des noeuds feuilles situés dans des domaines en aval du domaine et le cas échéant dans ledit domaine.

## Claims

1. Method for determining a point-to-multipoint tree linking a root node (10) to a plurality of leaf nodes (21-28), at least some of the nodes belonging to distinct domains (1-4), implemented by a paths calculating entity (51, 52) associated with a domain, termed the current domain, said method **characterized in that** it comprises:
- a step (E10) of receiving at least one message (40) comprising a first set of at least one identifier of a bunch of at least one branch and of a respective cost (43, 45) associated with said bunch originating from at least one other paths calculating entity (52, 54) associated with a domain situated downstream of the current domain, the bunch of at least one branch making it possible to reach the leaf nodes situated in downstream domains,
- a step (E14) of determining at least one new bunch of at least one branch as a function of said at least one first set received, said new bunch of branches exhibiting a minimum cost and making it possible to also reach if appropriate the leaf nodes of the current domain.

2. Method according to Claim 1, in which, during the step of determining at least one new bunch, the number of new bunches is limited to a predetermined number.

3. Method according to Claim 1, in which, during the step of determining at least one new bunch, the new bunch is limited to a branch.

4. Method according to Claim 1, in which the steps of receiving (E10) at least one message comprising a first set of at least one identifier of a bunch of at least one branch and a respective cost (43, 45) associated with said bunch and of determining (E14) at least one new bunch of at least one branch and then a step (E16) of dispatching a message comprising a second set of the identifier or identifiers of the new bunch or bunches determined and a respective cost associated with said new bunch are executed successively from downstream to upstream by entities (52-54) for calculating paths to a paths calculating entity (51) associated with the upstream domain comprising the root node.

5. Method according to Claim 1, furthermore comprising a step (E6) of dispatching a request (30) for determining a point-to-multipoint tree to paths calculating entities associated with domains situated downstream of the current domain prior to the receiving step (E10).

6. Paths calculating entity (100) associated with a domain, termed the current domain, for determining a point-to-multipoint tree linking a root node (10) to a plurality of leaf nodes (21-28), at least some of the nodes belonging to distinct domains (1-4), said entity being **characterized in that** it comprises:
- means (102) for receiving at least one message (40) comprising a first set of at least one identifier of a bunch of at least one branch and of a respective cost (43, 45) associated with said bunch originating from at least one other paths calculating entity (52-54) associated with a domain situated downstream of the current domain, the bunch of at least one branch making it possible to reach the leaf nodes situated in downstream domains,
- means (106) for determining at least one new bunch of at least one branch as a function of first sets received, said new bunch of branches exhibiting a minimum cost and making it possible to also reach if appropriate the leaf nodes of the current domain.

7. System comprising a plurality of paths calculating entities for according to Claim 6.

8. Node of a communication network comprising a path calculating entity according to Claim 6.

9. Computer program comprising instructions for the implementation of the method for determining a point-to-multipoint tree linking a root node (10) to a plurality of leaf nodes (21-28), at least some of the nodes belonging to distinct domains (1-4), according to Claim 1 when this program is executed by a processor.

10. Signal, emitted by a path calculation entity associated with a domain destined for a path calculation entity associated with an upstream domain, in response to a request for determining a point-to-multipoint tree linking a root node to a plurality of leaf nodes, at least some of the nodes belonging to distinct domains, said signal carrying a message (40) comprising a set of at least one identifier of a bunch of at least one branch and of a respective cost (43, 45) associated with said bunch, the bunch of at least one branch making it possible to reach leaf nodes situated in domains downstream of the domain and if appropriate in said domain.

## Patentansprüche

1. Verfahren zum Bestimmen eines Punkt-zu-Mehrpunkt-Baums, der einen Wurzelknoten (10) mit mehreren Blattknoten (21-28) verbindet, wobei wenigstens Bestimmte der Knoten zu verschiedenen Domänen (1-4) gehören, das durch eine Entität (51, 52) zum Berechnen von Wegen, die einer Domäne, die aktuelle Domäne genannt wird, zugeordnet ist, ausgeführt wird, wobei das Verfahren **dadurch gekennzeichnet ist, dass** es Folgendes umfasst:
- einen Schritt (E10) zum Empfangen wenigstens einer Nachricht (40), die eine erste Gesamtheit aus wenigstens einer Kennung eines Bouquets mit wenigstens einem Ast und aus jeweiligen Kosten (43, 45), die dem Bouquet zugeordnet sind, enthält und von wenigstens einer anderen Wegeberechnungsentität (52-54) stammt, die einer der aktuellen Domäne nachgeordneten Domäne zugeordnet ist, wobei das Bouquet mit wenigstens einem Ast ermöglicht, die Blattknoten, die sich in den nachgeordneten Domänen befinden, zu verbinden,
- einen Schritt (E14) zum Bestimmen wenigstens eines neuen Bouquets mit wenigstens einem Ast als Funktion der wenigstens einen ersten empfangenen Gesamtheit, wobei das neue Bouquet von Ästen minimale Kosten aufweist und ermöglicht, gegebenenfalls die Blattknoten der aktuellen Domäne ebenfalls zu verbinden.

2. Verfahren nach Anspruch 1, wobei im Schritt des Bestimmens wenigstens eines neuen Bouquets die Anzahl neuer Bouquets auf eine vorgegebene Anzahl beschränkt ist.

3. Verfahren nach Anspruch 1, wobei im Schritt des Bestimmens wenigstens eines neuen Bouquets das neue Bouquet auf einen Ast beschränkt ist.

4. Verfahren nach Anspruch 1, wobei die Schritte des Empfangens (E10) wenigstens einer Nachricht, die eine erste Gesamtheit aus wenigstens einer Kennung eines Bouquets mit wenigstens einem Ast und aus jeweiligen Kosten (43, 45), die dem Bouquet zugeordnet sind, enthält, und des Bestimmens (E14) wenigstens eines neuen Bouquets mit wenigstens einem Ast und dann ein Schritt (E16) des Schickens einer Nachricht, die eine zweite Gesamtheit einer oder mehrerer Kennungen des einen oder der mehreren neuen bestimmten Bouquets und aus jeweiligen Kosten, die dem neuen Bouquet zugeordnet sind, enthält, nacheinander von stromabwärtig nach stromaufwärtig durch die Wegeberechnungsentitäten (52-54) zu einer Wegeberechnungsentität (51), die der vorgeordneten Domäne zugeordnet ist, die den Wurzelknoten enthält, ausgeführt werden.

5. Verfahren nach Anspruch 1, das außerdem vor dem Empfangsschritt (E10) einen Schritt (E6) des Schickens einer Anforderung (30) zum Bestimmen eines Punkt-zu-Mehrpunkt-Baums zu den Wegeberechnungsentitäten, die Domänen zugeordnet sind, die der aktuellen Domäne nachgeordnet sind, umfasst.

6. Entität (100) zum Berechnen von Wegen, die einer Domäne, die aktuelle Domäne genannt wird, zugeordnet ist, um einen Punkt-zu-Mehrpunkt-Baum zu bestimmen, der einen Wurzelknoten (10) mit mehreren Blattknoten (21-28) verbindet, wobei wenigstens Bestimmte der Knoten zu verschiedenen Domänen (1-4) gehören, wobei die Entität **dadurch gekennzeichnet ist, dass** sie Folgendes umfasst:
- Mittel (102) zum Empfangen wenigstens einer Nachricht (40), die eine erste Gesamtheit aus wenigstens einer Kennung eines Bouquets mit wenigstens einem Ast und aus jeweiligen Kosten (43, 45), die dem Bouquet zugeordnet sind, enthält und von wenigstens einer anderen Wegeberechnungsentität (52-54) stammt, die einer Domäne zugeordnet ist, die der aktuellen Domäne nachgeordnet ist, wobei das Bouquet mit wenigstens einem Ast ermöglicht, die Blattknoten, die sich in den nachgeordneten Domänen befinden, zu verbinden,
- Mittel (106) zum Bestimmen wenigstens eines neuen Bouquets mit wenigstens einem Ast als Funktion der ersten empfangenen Gesamtheiten, wobei das neue Bouquet von Ästen minimale Kosten aufweist und ermöglicht, gegebenenfalls die Blattknoten der aktuellen Domäne ebenfalls zu verbinden.

7. System, das mehrere Wegeberechnungsentitäten nach Anspruch 6 umfasst.

8. Knoten eines Kommunikationsnetzes, der eine Wegeberechnungsentität nach Anspruch 6 umfasst.

9. Computerprogramm, das Befehle enthält, um das Verfahren zum Bestimmen eines Punkt-zu-Mehrpunkt-Baums, der einen Wurzelknoten (10) mit mehreren Blattknoten (21-28) verbindet, wobei wenigstens Bestimmte der Knoten zu verschiedenen Domänen (1-4) gehören, nach Anspruch 1 auszuführen, wobei dieses Programm durch einen Prozessor ausgeführt wird.

10. Signal, das von einer einer Domäne zugeordneten Wegeberechnungseinheit zu einer einer vorgeordneten Domäne zugeordneten Wegeberechnungseinheit als Reaktion auf eine Anforderung zum Bestimmen eines Punkt-zu-Mehrpunkt-Baums, der einen Wurzelknoten mit mehreren Blattknoten verbindet, wobei wenigstens Bestimmte der Knoten zu verschiedenen Domänen gehören, ausgesendet wird, wobei das Signal eine Nachricht (40) führt, die eine Gesamtheit aus wenigstens einer Kennung eines Bouquets mit wenigstens einem Ast und aus jeweiligen Kosten (43, 45), die dem Bouquet zugeordnet sind, enthält, wobei das Bouquet mit wenigstens einem Ast ermöglicht, Blattknoten, die sich in den der Domäne nachgeordneten Domänen und gegebenenfalls in dieser Domäne befinden, zu verbinden.
